# EUROPEAN PATENT SPECIFICATION

(11) **EP 3 464 986 B1**
(45) Date of publication and mention of the grant of the patent: **01.09.2021**
(21) Application number: 17739302.2
(22) Date of filing: 23.05.2017
(51) Int. Cl.: F16M 11/04, G02B 7/00, G03B 17/56, F16M 13/00

(54) **DUAL SUPPORT PLATE FOR FIXING OPTICAL DEVICES IN A RECESSED CLAMPING ELEMENT**
DOPPELTE TRÄGERPLATTE ZUR BEFESTIGUNG VON OPTISCHEN VORRICHTUNGEN IN EINEM AUSGESPARTEN KLEMMELEMENT
PLAQUE DE SUPPORT DOUBLE PERMETTANT DE FIXER DES DISPOSITIFS OPTIQUES DANS UN ÉLÉMENT DE SERRAGE ENCASTRÉ

(30) Priority: 24.05.2016 HU 1600333
(43) Date of publication of application: 10.04.2019
(73) Proprietor: Uniqball KFT., 6728 Szeged (HU)
(72) Inventor: NOVÁK, László, 8220 Balatonalmádi (HU); KÁRMÁN, Balázs, 6792 Zsombó (HU); VADÁSZ, Sándor, 6726 Szeged (HU)
(74) Representative: Danubia Patent & Law Office LLC
(86) International application number: PCT/HU2017/050018
(87) International publication number: WO 2017/203308

(56) References cited:
- CN-A- 103 363 254
- US-A1- 2010 005 636
- US-B1- 9 223 190

## Description

The invention relates to a double support plate connectable to an optical device which can be inserted and fixed in a connected state into a grooved clamping element to be mounted in a stander (tripod), the support plate has an elongated flat rectangular body having planar boundary surfaces, and at the opposite sides thereof longitudinal grooves are provided that have profiles fitting to the groove of the clamping element and in the central part of the body an opening is provided for fixing the optical device. Document US9223190 discloses such a known support according to the preamble of claim 1.

For the fixing of optical devices, primarily cameras double support plates are widely used, which are generally termed as "L-brackets". Furthermore, for the releasable connection of optical elements ARCA parts are widely used, which comprise substantially a first clamping element in which a swallow tail shaped groove is provided (that have inclined boundary surfaces with 45° angle of inclination), and the width of the groove can be changed by an adjusting means. The other element has outer edges inclined to fit and conform to the groove of the other element, and by opening the groove the counter piece can be inserted in the groove, it can slide along the groove in longitudinal direction and by decreasing the width of the groove the elements can be fixed at any position.

L-shaped double brackets are widely used for holding a camera on a stander, wherein both legs of the L-bracket can be clamped by an ARCA connection in a leveled clamping element mounted on the top of the stander (being a tripod). If the camera held by the L-bracket is attached at the first time with one of its legs to the clamping element and at the second time with the other leg, then the camera will first be in a landscape and in the other case in a portrait position, whereby the user can decide the position how he wishes to fix the camera on the stander.

Such a typical L-bracket is disclosed e.g. on the website: http://www.acratech.net/l-brackets-and-nodal-rails/universal-l-bracket/. This accessory has a high price amounting to USD 230 and it has a large size whereby it is not simple to be carried.

The use of L-brackets is more inconvenient if the camera or video recorder held thereby is connected by a cable to an electronic device (e.g. power supply or amplifier), because the cable together with its connector is coupled to one side of the machine, and its present renders the turning of the machine by 90° difficult. The fast fixing of the machines to a tripod in two positions differing by 90° is often required, therefore the L-brackets used up to the present are too expensive and in given cases they cannot be used at all.

The task of the invention is to provide a universal double support plate which is cheaper and easier to be carried, which can fix the connected optical device in any of two normal positions in a clamping element, wherein the present of any cable connected to the device cannot prevent the free attachment by the support plate.

For solving this task it has been recognized that the thickness of widely used ARCA or other support plates is sufficiently large to allow the formation of respective transversal inclined surfaces at one of its ends that fit in the groove of the clamping element, then by means of these transversal support surfaces the support plate can be clamped in the same clamping element when it is in standing position, and it can be fixed therein with a sufficient stability.

According to the invention a double support plate has been provided designed as defined in the attached claims.

It should be noted that the design of the solution according to the invention is not limited to the conditions of the generally used ARCA dimensions with 45° angle of inclination because the angle of 60° used in Manfrotto plates can also be used just any other appropriate other angles.

It might be worthwhile using plates with different sizes from the widely used standard sizes e.g. in which instead of the width of 38 mm used up to the present a width of 25 mm can also be used, wherein the angle of inclination can be 45° or 60° or any other value. The use of narrower plates having a width of 1 inch can be preferred as it fits to the always smaller size of recent MILC cameras, because the currently 38 mm wide ARCA-Swiss standard plates are too wide and they extend over the width of the camera body, whereby the grip of the camera can be inconvenient.

The transversal positioning can be made more stable if the double support plate gets suddenly wider in the region of the transversal wedge shaped ribs, and the widened bottom part has a planar bottom surface, and the transversal inclined wedge ribs are provided on this bottom part and the longitudinal grooves extend through the wider bottom part.

The connection of the clamping element and the double support plates can be provided also if the profile provided on the first element fits and conforms to the profile on the other element, and the roles of the grooves and the opposite wedge ribs are interchanged. In this case it is preferred if the mutually connected surfaces of the clamping element and the double support plate allow form-fitting closure. The term "closure" covers the situation when the conforming surfaces are pressed to each other then the pressed connection prevents any displacement. This connection is the best when the connected surfaces are the inverse of each other.

The invention will now be described in connection with preferable embodiments thereof, wherein reference will be made to the accompanying drawings. In the drawing:
Fig. 1 shows the schematic perspective view of a known ARCA clamping element:
Fig. 2 shows the schematic perspective view of a known support plate;
Fig. 3 shows the top view of an embodiment of a double support plate according to the invention;
Fig. 4 shows the front view of the double support plate shown in Fig.3;
Fig. 5 shows the side view of a further embodiment;
Fig. 6 shows the front view of the embodiment shown in Fig. 5; and
Fig. 7 shows the perspective view of the second embodiment.

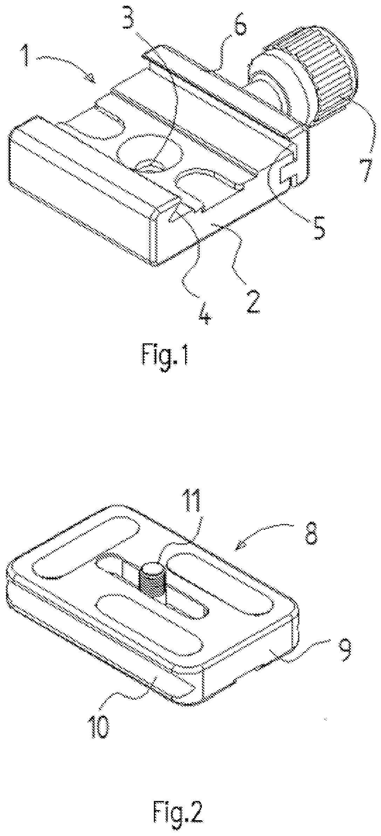

Fig. 1 shows a widely used embodiment of an ARCA type clamping element 1, that has a flat body 2 having a threaded bore 3 leading therethrough by which the clamping element 1 can be fixed to a stander (tripod) or ball head not shown in the drawing. At the two sides of the body 2 respective guiding grooves are provided which have inclined guiding surfaces 4, 5 having an angle of inclination being preferably 45° in inward and upward direction, wherein the guiding groove provides a conventional "swallow tail" type guiding. One of the guiding surfaces of the guiding groove is constituted by the material of the body 2, and the opposite guiding surface 5 is part of a pressing body 6 which is connected to the body 2 in a guided manner, and its position can be adjusted in the direction of the width of the groove by a head 7 of a bolt.

Fig. 2 shows a widely used ARCA type support plate 8 in perspective view that has a flat rectangular body 9, and respective grooves 10 extend along the sides of the body 10. The grooves 10 have guiding surfaces that widen from the central interior part in outward direction, wherein the spacing between the grooves and their angles of inclination correspond to the similar sizes of the guiding path provided on the clamping element 1 shown in Fig. 1, whereby the support plate 8 can be inserted in the swallow tail shaped grooves of the clamping element 1 and it can be freely adjusted along the length thereof. By fastening the head 7 the support plate 8 can be fixed in any position because this fastening presses the opposite guiding surfaces 4, 5 to the grooves 10 of the support plate 8. In a central part of the support plate a bore is provided and a threaded bolt 11 is lead therethrough. In Fig. 2 only the threaded surface of the bolt 11 can be seen that extends out of the bore. The head of the bolt cannot be seen in the drawing and it is arranged in a recess formed at the rear side of the support plate 8. The support plate 8 can be connected to the device held thereby by means of the bolt 11, wherein the device can be e.g. a camera that has a threaded bore in its bottom part that fits the thread of the bolt 11.

The support plate 8 shown in Fig. 2 can be inserted only in one possible way in the interior of the clamping element 1 namely when the upper plane of the body 2 meets the bottom plane of the support plate 8.

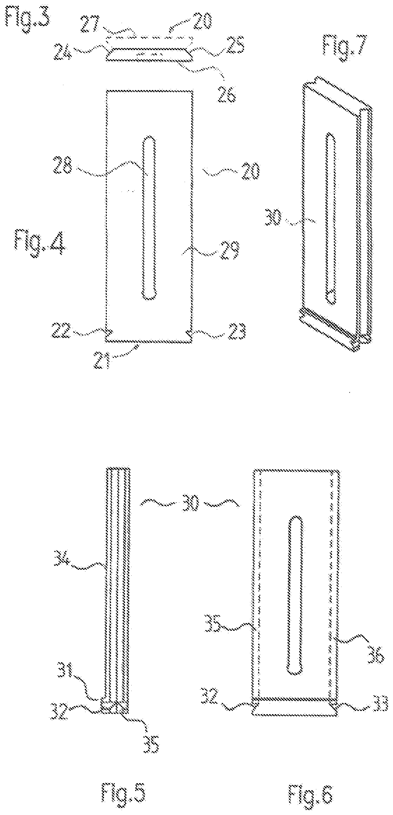

Reference is made now to Figs. 3 and 4 which show the top and front views of a double support plate 20. The design of the double support plate 20 is substantially identical with that of the support plate 8 shown in Fig. 2, the difference lies only in the design of the bottom end of the support plate 20 as shown in Fig. 4. At the lower end 21 of the double support plate 20 inclined wedge ribs 22, 23 are provided that extend in transversal direction and normal to the plane of the plate, and the profile of the ribs 22, 23 fits in the swallow tail shaped grooves provided by the guiding surfaces 4,5 of the clamping element 1. Over the region of the wedge like ribs 22, 23 at the two elongated sides of the double support plate 20 two longitudinal grooves 24, 25 are provided which are similar to the grooves 10 of the support plate 8 shown in Fig. 2, whereby the double support plate can be inserted and fixed in the clamping element 1 shown in Fig. 1 in the same way as the support plate 8. In this case the bottom plate 26 of the double support plate slides on and is supported by the upper surface of the swallow tail shaped groove defined by the guiding surfaces 4, 5 of the clamping element 1.

In Fig. 3 the upper part 27 of the double support plate 20 was drawn with a dashed line because for the fixing in the clamping element 1 the lower half drawn with a full line is sufficient, however in the practice grooves formed by double wedged surfaces are used, because such a design can be used following the fixing in the clamping element 1 for clamping a further different element. The thickness of the double support plate 20 is 0,375 inch i.e. 9,52 mm when ARCA sizes are used but if the upper part 27 is designed in a different way it is suggested that the thickness be at least 8 mm.

In the central part of the double support plate 20 an elongated or circular opening 28 is provided in the flat body 29 of the double support plate for the accommodation of a bolt not shown in the drawing but which is used for fixing an optical device e.g. a camera similar to the bolt 11 shown in Fig. 2.

The double support plate 20 can be fixed in a standing position i.e. normal to the plane of the plate in the swallow tail shaped groove of the clamping element 1, because in that case the surface of the lower end 21 of the standing double support plate 20 will contact and supported by the upper support surface of the clamping element 1, and the transversal wedge ribs 22, 23 will be fitted in the guiding surfaces 4, 5 of the clamping element 1. For providing a sufficient stability it is advisable if the thickness of double support plate 20 is at least 8 mm, because this size is sufficiently great that the grooves of the clamping element 1 can clamp and hold the double support plate 20. It should be noted, however that this thickness value is not critical and a well usable double support plate 20 can be realized even with narrower i.e. less thick designs.

Figs. 5-7 show the side and front view of a further double support plate that has a wider bottom part. In the side view of Fig. 5 it can be seen that the thickness of the body of the double support plate 30 suddenly increases at the bottom part 31, whereby when it is fixed in standing position the contact with the support plate of the clamping element 1 will be larger. The wedge ribs 32, 33 shown in Fig. 6 correspond substantially to the wedge ribs 22, 23 shown in Fig. 4. In Fig. 5 only the wedge rib 32 is visible. Along the longer side of the double support plate 30 respective longitudinal grooves 35, 36 are provided which are similar to the longitudinal grooves in the previous embodiment. These grooves are covered in Fig. 6 and their internal edges are illustrated by dashed lines. The grooves 35, 36 extend through the wider bottom part 31, and the meeting of the inclined surfaces is visible in Fig. 5. The perspective view of Fig. 7 shows clearly the inclined meeting zones formed at the bottom of the double support plate, as well as the widening of one side of the bottom part 31.

The most significant advantage of the double support plate 20, 30 according to the invention lies in its simplicity and low cost. If a camera is attached to any of the double support plates 20, 30 then the camera can be positioned without removing the connection to the plate in such a first way that the larger plate surface of the double support plate 20 or 30 contacts the support plate of the clamping element 1. This arrangement corresponds to the generally used landscape position. If there is a need of using of camera in a normal position thereto i.e. in portrait position then by loosening the clamping element 1 the double support plate 20 or 30 is removed from the clamping element 1 and the lower end 21 or the wider bottom part 31 is placed on the support plate of the clamping element 1, and in this case either the wedge ribs 22, 23 or 32, 33 are inserted in the swallow tail shaped grooves of the clamping element 1. In this case the position of the camera will be changed.

It should be noted that in the embodiments shown the negative groove was provided on the clamping element to which the inclined surfaces of the wedge ribs were fitted, but an inverse design of the grooves and the fitting wedge ribs can also be realized, wherein the role of the fitting elements connected by the swallow tail shaped wedge ribs will be interchanged. In practice the design shown in the exemplary embodiments is more often used. Instead of an inverse design any other connection can be realized which can ensure the fixed attachment of the clamped pieces.

By means of using the double support plate 20, 30 according to the invention the previously used large and expensive L-brackets can be spared which is preferred not only because of the lower costs but it might eliminate the need for the user to carry both a linear and a separate L-bracket.

## Claims

1. Double support plate connectable to an optical device which can be inserted and fixed in a connected state into a grooved clamping element (1) to be mounted on a stander, said support plate comprising an elongated flat rectangular body (29) having planar boundary surfaces, and at the opposite sides thereof longitudinal grooves (24,25) are provided that have profiles fitting to the groove of the clamping element (1) and in the central part of the body (29) an opening (28) is provided for the placement of a bolt realizing said connection to the optical device, **characterized in that** at an end portion of the body (29) transversal wedge ribs (22, 23) are provided in said opposite sides of the body (29) which extend normal both to the longitudinal grooves (24, 25) and the plane of the body (29), wherein the profile of the wedge ribs (22, 23) is the same as the profile of the longitudinal grooves (24, 25) at the sides of the body (29), whereby the support plate together with the optical device when connected thereto can be releasably inserted and fixed into said grooved clamping element (1) in one of two mutually normal positions when either the longitudinal grooves (24, 25) or the transversal wedge ribs (22, 23) are fitted into the grooved clamping element (1).

2. The double support plate as claimed in claim 1 **characterized in that** both the longitudinal grooves (24, 25) and the transversal wedge ribs (22, 23) have ARCA type inclined surfaces with an angle of 45° inclination.

3. The double support plate as claimed in claim 1 **characterized in that** in the region of the transversal wedge ribs (32, 33) the body (34) of the double support plate (30) gets suddenly wider, and the widened bottom part (31) has a planar bottom surface, and the transversal inclined wedge ribs (32, 33) are provided on this bottom part (31) and the longitudinal grooves (35, 36) extend through the wider bottom part (31).

4. The double support plate as claimed in any of claims 1 to 3, **characterized in that** the mutually attached surfaces of the clamping element (1) and of the double support plate (20, 30) have conforming designs.

5. The double support plate as claimed in claim 4, **characterized in that** the conforming surfaces are inverse of one another.

6. The double support plate as claimed in any of claims 1 to 5, **characterized in that** the thickness of the body (29) is at least 8 mm.

## Patentansprüche

1. Doppelträgerplatte, die mit einem optischen Gerät verbindbar ist und die in ein an einem Ständer zu montierendes genutetes Klemmelement (1) in verbundenem Zustand einschiebbar und fixierbar ist, wobei die Trägerplatte einen langgestreckten flachen rechteckigen Körper (29) mit ebenen Begrenzungsflächen aufweist und an deren gegenüberliegenden Seiten Längsnuten (24, 25) vorgesehen sind, die Profile, die in die Nut des Klemmelements (1) passen, aufweisen, und wobei im mittleren Teil des Körpers (29) eine Öffnung (28) zum Einsetzen eines Bolzens, der die Verbindung mit dem optischen Gerät realisiert, vorgesehen ist,
**dadurch gekennzeichnet, dass** an einem Endabschnitt des Körpers (29) quer geneigte Keilrippen (22, 23) in den gegenüberliegenden Seiten des Körpers (29), die sich sowohl normal zu den Längsnuten (24, 25) als auch zur Ebene des Körpers (29) erstrecken, vorgesehen sind, wobei das Profil der Keilrippen (22, 23) dem Profil der Längsnuten (24, 25) an den Seiten des Körpers (29) entspricht, wobei die Trägerplatte zusammen mit der damit verbundenen optischen Einrichtung in das genutete Klemmelement (1) in einer von zwei zueinander normalen Stellungen lösbar eingesetzt und fixiert werden kann, wenn entweder die Längsnuten (24, 25) oder die quer geneigten Keilrippen (22, 23) in das genutete Klemmelement (1) eingesetzt werden.

2. Doppelträgerplatte nach Anspruch 1, **dadurch gekennzeichnet, dass** sowohl die Längsnuten (24, 25) als auch die quer geneigten Keilrippen (22, 23) Schrägflächen vom Typ ARCA mit einem Neigungswinkel von 45° aufweisen.

3. Doppelträgerplatte nach Anspruch 1, **dadurch gekennzeichnet, dass** der Körper (34) der Doppelträgerplatte (30) im Bereich der quer geneigten Keilrippen (32, 33) sprunghaft breiter wird und das verbreiterte Unterteil (31) eine ebene Bodenfläche aufweist, und an diesem Unterteil (31) die quer geneigten Keilrippen (32, 33) vorgesehen sind, und sich die Längsnuten (35, 36) durch das breitere Unterteil (31) erstrecken.

4. Doppelträgerplatte nach einem der Ansprüche 1 bis 3, **dadurch gekennzeichnet, dass** die aneinander befestigten Flächen des Klemmelements (1) und der Doppelträgerplatte (20, 30) konform ausgebildet sind.

5. Doppelträgerplatte nach Anspruch 4, **dadurch gekennzeichnet, dass** die sich anschmiegenden Flächen zueinander invers sind.

6. Doppelträgerplatte nach einem der Ansprüche 1 bis 5, **dadurch gekennzeichnet, dass** die Dicke des Körpers (29) mindestens 8 mm beträgt.

## Revendications

1. Plaque de support double pouvant être reliée à un dispositif optique qui peut être insérée et fixée dans un état relié dans un élément de serrage rainuré (1) pour être montée sur un trépied, ladite plaque de support comprenant un corps rectangulaire plat allongé (29) ayant des surfaces limites planaires, et sur ses côtés opposés des rainures longitudinales (24,25) sont fournies ayant des profils s'adaptant à la rainure de l'élément de serrage (1) et dans la partie centrale du corps (29) une ouverture (28) est fournie pour le positionnement d'un boulon qui réalise ledit raccordement au dispositif optique, **caractérisée en ce qu'**au niveau d'une portion d'extrémité du corps (29) des nervures en coin transversales (22, 23) sont fournies sur lesdits côtés opposés du corps (29) qui s'étendent perpendiculaires à la fois aux rainures longitudinales (24, 25) et au plan du corps (29), dans laquelle le profil des nervures en coin (22, 23) est égal au profil des rainures longitudinales (24, 25) sur les côtés du corps (29), par quoi la plaque de support ensemble avec le dispositif optique lorsqu'elle est reliée à celui-ci peut être insérée et fixée de manière libérable dans ledit élément de serrage rainuré (1) dans l'une de deux positions mutuellement perpendiculaires lorsque soit les rainures longitudinales (24, 25) soit les nervures en coin transversales (22, 23) sont adaptées dans l'élément de serrage rainuré (1).

2. Plaque de support double telle que revendiquée dans la revendication 1 **caractérisée en ce que** à la fois les rainures longitudinales (24, 25) et les nervures en coin transversales (22, 23) ont des surfaces inclinées de type ARCA avec un angle d'inclinaison de 45°.

3. Plaque de support double telle que revendiquée dans la revendication 1 **caractérisée en ce que** dans la zone des nervures en coin transversales (32, 33) le corps (34) de la plaque de support double (30) s'élargit brusquement, et la partie de fond élargie (31) a une surface de fond planaire, et les nervures en coin inclinées transversales (32, 33) sont fournies sur cette partie de fond (31) et les rainures longitudinales (35, 36) s'étendent à travers la partie de fond élargie (31).

4. Plaque de support double telle que revendiquée dans l'une quelconque des revendications 1 à 3 **caractérisée en ce que** les surfaces mutuellement attachées de l'élément de serrage (1) et la plaque de support double (20, 30) ont des conceptions conformes.

5. Plaque de support double telle que revendiquée dans la revendication 4 **caractérisée en ce que** les surfaces conformes sont l'une l'inverse de l'autre.

6. Plaque de support double telle que revendiquée dans l'une quelconque des revendications 1 à 5 **caractérisée en ce que** l'épaisseur du corps (29) est au moins 8 mm.
